# EUROPÄISCHE PATENTSCHRIFT

(11) **EP 3 339 530 B1**
(45) Veröffentlichungstag und Bekanntmachung des Hinweises auf die Patenterteilung: **30.12.2020**
(21) Anmeldenummer: 17198225.9
(22) Anmeldetag: 25.10.2017
(51) Int. Cl.: E04D 13/16

(54) **SYSTEM FÜR DIE HERSTELLUNG EINER WÄRMEDÄMMSCHICHT AUF EINEM FLACHDACH**
SYSTEM FOR THE PRODUCTION OF A THERMAL BARRIER COATING ON A FLAT ROOF
SYSTÈME DE FABRICATION D'UNE COUCHE D'ISOLATION THERMIQUE SUR UN TOIT PLAT

(30) Priorität: 22.12.2016 DE 102016125525
(43) Veröffentlichungstag der Anmeldung: 27.06.2018
(73) Patentinhaber: Paul Bauder GmbH & Co. KG, 70499 Stuttgart (DE)
(72) Erfinder: Bauder, Gerhard, 70499 Stuttgart (DE); Bauder, Paul-Hermann, 70499 Stuttgart (DE)
(74) Vertreter: Hoeger, Stellrecht & Partner Patentanwälte mbB

(56) Entgegenhaltungen:
- WO-A1-90/03482
- WO-A1-2008/083970
- CA-A1- 2 521 801
- DE-U1- 9 010 537
- DE-U1- 29 909 557
- US-A- 4 503 644

## Beschreibung

Die vorliegende Erfindung betrifft ein System für die Herstellung einer Wärmedämmschicht auf einem Flachdach, wobei die Wärmedämmschicht eine dem Flachdach zugewandte, ebene Grundfläche und eine dem Flachdach abgewandte, ebene Deckfläche aufweist, die zur Grundfläche um einen Neigungswinkel α geneigt ist, wobei die Wärmedämmschicht mindestens zwei Bereiche umfasst, die jeweils entlang eines Grates oder einer Kehle aneinander angrenzen, und wobei die Gefällerichtungen der Deckflächen angrenzender Bereiche senkrecht zueinander orientiert sind, umfassend
- mehrere Serien mit jeweils einer Mehrzahl von identischen Gefälleplatten aus einem Dämmstoff, wobei die Gefälleplatten ebene, quadratische Grundflächen und Deckflächen sowie zur Grundfläche senkrechte Seitenflächen aufweisen, wobei die Deckfläche zur Grundfläche um den Neigungswinkel α geneigt ist, wobei zwei parallele, zur Gefällerichtung senkrechte Seitenflächen eine Anfangshöhe bzw. eine Endhöhe aufweisen, deren Höhendifferenz ΔH ist, und wobei die Gefälleplatten aller Serien dieselben Abmessungen der Grund- und Deckflächen aufweisen, während sich die Höhen der verschiedenen Serien derart unterscheiden, dass die Endhöhe einer vorangehenden Serie von Gefälleplatten der Anfangshöhe einer nachfolgenden Serie von Gefälleplatten entspricht, aber die Höhendifferenz ΔH bei den Gefälleplatten aller Serien gleich ist.

Mit der Gefällerichtung ist in der vorliegenden Beschreibung stets die auf die Grundfläche projizierte Falllinie der Deckfläche gemeint.

Es ist seit Längerem bekannt, Wärmedämmschichten auf Flachdächern von Gebäuden mit einem Gefälle auszubilden. WO 90/03482 A1 offenbart ein bekanntes System mit Gefälleplatten, Kehl-Ausgleichplatten und Grat-Ausgleichplatten.

Solche Gefälledämmungen erfüllen neben der thermischen Isolation des Gebäudes die weitere Aufgabe, eine effektive Entwässerung des Flachdaches sicherzustellen, indem das Niederschlagswasser entlang des Gefälles in Richtung einer Dachrinne oder einer Ablauföffnung abfließen kann. Da die Wärmedämmschicht ohnehin eine bestimmte Dicke aufweisen muss, um die erforderliche Isolation zu erreichen, besteht hier der erforderliche Spielraum, um das Gefälle durch eine entsprechende Variation der Dicke der Dämmstoffplatten auszubilden. Auf der geneigten Deckfläche einer solchen Gefälledämmung wird dann üblicherweise eine Abdichtung, z.B. aus Bitumen-Schweißbahnen, aufgebracht, worauf dann optional ein weiterer Aufbau folgen kann, z.B. eine Kiesschicht oder eine Substratschicht für eine Dachbegrünung.

Beim Einbau einer Wärmedämmschicht mit einem gattungsgemäßen System werden die identischen Gefälleplatten einer Serie jeweils so nebeneinander angeordnet, dass ihre Deckflächen eine durchgehende, um den Neigungswinkel α geneigte Deckfläche bilden. Entlang der Gefällerichtung schließt sich dann jeweils eine Reihe der vorangehenden bzw. nachfolgenden Serie von Gefälleplatten an, so dass sich im einfachsten Fall eine einzige, ebene Deckfläche der Wärmedämmschicht ergibt, die das Flachdach nach einer Seite hin entwässert.

Aus Gründen der besseren Handhabbarkeit können die quadratischen Gefälleplatten mittig halbiert werden, bevorzugt entlang der Gefällerichtung. Es werden dann rechteckige Teilplatten auf der Baustelle angeliefert und dort wieder zu quadratischen Gefälleplatten zusammengefügt.

Sehr häufig ist es jedoch aufgrund der Geometrie der Dachfläche und/oder aufgrund der Position der Ablauföffnungen erforderlich, die Gefälledämmung in verschiedenen Bereichen des Flachdachs mit unterschiedlichen, insbesondere zueinander senkrechten Gefällerichtungen auszubilden. Der Übergang zwischen zwei solchen Bereichen erfolgt entlang eines Grates oder einer Kehle. Um diese Strukturen beim Einbau der Wärmedämmschicht auszubilden, sind verschiedene Vorgehensweisen bekannt.

Zum einen ist es möglich, im Rahmen der Herstellung der Gefälleplatten auch spezielle quadratische Grat- und Kehlplatten anzufertigen. Dies erfordert jedoch zu jeder Serie von Gefälleplatten (dies können z.B. bis zu 20 Serien sein) eine eigene Grat- bzw. Kehlplatte in der entsprechenden Höhenstufe, so dass insgesamt eine Vielzahl unterschiedlicher Platten benötigt werden. Im Hinblick auf die Logistik ist ein solches System sehr ungünstig, zum einen weil es sich um relativ voluminöse Teile handelt, und zum anderen, weil bei der Lieferung der benötigten Platten zur Baustelle und bei der Zuordnung der Platten während des Einbaus in der Praxis mit Fehlern und Verwechslungen zu rechnen ist. Hinzu kommt, dass bei der Herstellung von Dämmstoffplatten aus Polyurethanhartschaum, die im Zuge der Aufschäumung des Polymers mit einer beidseitigen Kaschierung aus einer Aluminiumfolie oder einem Mineralvlies versehen werden (sogenannte Laminatorplatten), eine entsprechende Herstellung von Kehl- oder Gratplatten nicht möglich ist. Laminatorplatten haben in der Praxis eine zunehmende Bedeutung, da eine Kaschierung zur Erhöhung des Dämmwertes oder zur Verbesserung der Stabilität der Platten sehr vorteilhaft ist.

Bei Verwendung von Laminatorplatten besteht derzeit nur die Möglichkeit, die zur Ausbildung eines Grates oder einer Kehle benötigten Teile vor Ort auf der Baustelle in Handarbeit herzustellen, indem die quadratischen Gefälleplatten entsprechend zugeschnitten werden. Dieses Verfahren, das natürlich auch bei Dämmstoffplatten ohne Kaschierung anwendbar ist, stellt allerdings einen erhöhten Arbeitsaufwand dar, und führt vor allem zu einer großen Menge an Ausschuss. Insbesondere können für die Ausbildung einer Kehle bzw. eines Grates immer nur die einen Hälften von diagonal durchtrennten Gefälleplatten verwendet werden. Abgesehen von den eher seltenen Fällen, dass bei einer Gefälledämmung sowohl eine Kehle als auch ein Grat vorgesehen sind, sind die anderen Hälften der durchtrennten Platten daher Ausschuss. Zudem kann es auch hier zu Verwechslungen kommen, da jeweils zwei verschiedene Plattenhälften mit derselben Höhenstufe kombiniert werden müssen.

In der Praxis behilft man sich zum Teil auch damit, bestimmte Bereiche entlang einer Kehle oder eines Grates mit Materialschüttungen aufzufüllen. Diese Lösung ist ebenfalls unbefriedigend, da solche Schüttungen weder hinsichtlich ihrer Dämmwirkung noch ihrer mechanischen Stabilität dem Material der Dämmstoffplatten entsprechen.

Der Erfindung liegt daher die Aufgabe zugrunde, ein System für die Herstellung einer Wärmedämmschicht auf einem Flachdach vorzuschlagen, mit dem Grate und Kehlen auf einfache Weise ausgebildet werden können.

Diese Aufgabe wird bei dem System der eingangs genannten Art erfindungsgemäß dadurch gelöst, dass das System ferner umfasst:
- eine Mehrzahl von identischen Kehl-Ausgleichsplatten, wobei die Kehl-Ausgleichsplatten ebene Grundflächen und Deckflächen in Form eines rechtwinkligen, gleichschenkligen Dreiecks aufweisen, wobei die Länge der Katheten des Dreiecks im Wesentlichen der Seitenlänge der Grundflächen der Gefälleplatten entspricht, und wobei die Kehl-Ausgleichsplatten am Schnittpunkt der Katheten eine Höhe von ΔH aufweisen und entlang der Hypotenuse eine geringere Höhe von 0 bis 2 cm; und
- eine Mehrzahl von ersten, identischen Grat-Ausgleichsplatten und eine Mehrzahl von zweiten, identischen Grat-Ausgleichsplatten, wobei alle Grat-Ausgleichsplatten ebene Grundflächen und Deckflächen in Form eines rechtwinkligen, gleichschenkligen Dreiecks aufweisen, oder im Fall der zweiten Grat-Ausgleichsplatten optional eines gleichschenkligen Trapezes, bei dem die rechtwinklige Spitze des Dreiecks abgeschnitten ist, wobei die Länge der Katheten des Dreiecks im Wesentlichen der Seitenlänge der Grundflächen der Gefälleplatten entspricht, wobei die ersten Grat-Ausgleichsplatten eine konstante Höhe von ΔH aufweisen, und wobei die zweiten Grat-Ausgleichsplatten entlang der Hypotenuse eine Höhe von ΔH aufweisen und am Schnittpunkt der Katheten bzw. gegenüber der Hypotenuse eine geringere Höhe von 0 bis 2 cm.

Das erfindungsgemäße System benötigt somit nur einen Typ von Ausgleichsplatten für die Ausbildung einer Kehle und zwei Typen von Ausgleichsplatten für die Ausbildung eines Grates.

Zur Ausbildung einer Kehle zwischen zwei Bereichen einer Wärmedämmschicht mittels des erfindungsgemäßen Systems werden zunächst Gefälleplatten aufeinander folgender Serien über Eck angeordnet, wobei diese Eck-Gefälleplatten jeweils zu derselben Serie gehören wie die sich seitlich anschließenden Gefälleplatten. Auf den Eck-Gefälleplatten wird dann jeweils eine Kehl-Ausgleichsplatte so angeordnet, dass eine Kathete über der Seitenfläche mit der Anfangshöhe zu liegen kommt. Dadurch ergibt sich auf dieser Seite der Kehle eine Gefällerichtung der Deckflächen der Kehl-Ausgleichsplatten, die senkrecht zur Gefällerichtung der darunter liegenden Gefälleplatten orientiert ist.

Zur Ausbildung eines Grates zwischen zwei Bereichen einer Wärmedämmschicht mittels des erfindungsgemäßen Systems werden zunächst Gefälleplatten aufeinander folgender Serien über Eck angeordnet, wobei diese Eck-Gefälleplatten im Vergleich zu den sich seitlich anschließenden Gefälleplatten jeweils zur vorangehenden Serie gehören. Dann wird auf den Eck-Gefälleplatten jeweils eine erste Grat-Ausgleichsplatte so angeordnet, dass eine Kathete über der Seitenfläche mit der Anfangshöhe zu liegen kommt. Auf den anderen diagonalen Hälften der Gefälleplatten wird jeweils eine zweite Grat-Ausgleichsplatte deckungsgleich angeordnet. In diesem Fall ergibt sich eine Deckfläche der zweiten Grat-Ausgleichsplatten, deren Gefällerichtung senkrecht zur Gefällerichtung der ersten Grat-Ausgleichsplatten orientiert ist.

Um die beschriebene Geometrie der Kehle bzw. des Grates mathematisch exakt auszuführen, müssten die Kehl-Ausgleichsplatten und die zweiten Grat-Ausgleichsplatten entlang der Hypotenuse bzw. an der rechtwinkligen Ecke theoretisch eine Höhe von null aufweisen, d.h. die Grundfläche und die Deckfläche müssten in einem spitzen Winkel zueinander auslaufen. Dies ist allerdings kaum praktikabel, da eine derartige Kante, sofern sie überhaupt herstellbar ist, beim Transport oder bei der Handhabung der Platten beim Einbau mit hoher Wahrscheinlichkeit beschädigt würde. Erfindungsgemäß können die Ausgleichsplatten daher in diesem Bereich eine Höhe von 0 bis 2 cm aufweisen. Aufgrund dieser Toleranz ergibt sich eine Abweichung der Länge der Katheten der Ausgleichsplatten im Vergleich zur Seitenlänge der Gefälleplatten. Die Vorgabe, dass die Länge der Katheten im Wesentlichen der Seitenlänge der Grundflächen der Gefälleplatten entspricht, schließt somit ausdrücklich den Fall ein, dass die Katheten um den Betrag kürzer sind, der sich aus dem "Fehlen" einer spitz zulaufenden Kante bzw. Ecke der Ausgleichsplatten ergibt. Bei den zweiten Grat-Ausgleichsplatten kann sich dabei die oben erwähnte Trapezform ergeben.

Ganz allgemein sind die obigen Angaben zur Geometrie und zu den Abmessungen der Gefälleplatten und Ausgleichsplatten so zu verstehen, dass eine gewisse Toleranz zulässig ist. Solche Toleranzen sind bei der Arbeit mit Dämmstoffen üblich und dem Fachmann bekannt.

Durch das erfindungsgemäße System ergeben sich sowohl bei der Logistik als auch bei den Abläufen auf der Baustelle wesentliche Vorteile, da sich die Anzahl unterschiedlicher Platten, die für die Herstellung einer Gefälledämmung mit einem bestimmten Neigungswinkel benötigt werden, erheblich reduziert. Zudem können kurzfristige Planänderungen bei der Gestaltung der Gefälledämmung leichter realisiert werden, da die Ausgleichsplatten für alle Höhenstufen gleich sind und damit eine große Flexibilität ermöglichen. Die Ausgleichsplatten sind dünner als die Basisplatten und haben daher einen geringeren Platzbedarf beim Transport und bei der Einlagerung.

Die Seitenlänge der Grundflächen der Gefälleplatten liegt typischerweise im Bereich von 80 bis 150 cm, bevorzugt im Bereich von 100 bis 120 cm. Die Gefälleplatten sind als solche quadratisch. Sie können aber zur Vereinfachung von Transport und Handhabung in Form von jeweils zwei rechteckigen Teilplatten vorliegen, die dann vor Ort wieder zu quadratischen Gefälleplatten zusammengefügt werden. Bevorzugt ist bei den Teilplatten die Seitenlänge in Gefällerichtung (die der Kathetenlänge der Ausgleichsplatten entspricht) doppelt so groß ist wie die Seitenlänge senkrecht zur Gefällerichtung. Die Abmessungen können z.B. 120 x 60 cm betragen.

Der Neigungswinkel α der Deckflächen der Gefälleplatten liegt typischerweise im Bereich von 0,5° bis 3°, bevorzugt im Bereich von 0,8° bis 2°.

Aus dem Neigungswinkel α und der Seitenlänge L der Gefälleplatten in Gefällerichtung ergibt sich dann die Höhendifferenz ΔH = L · tan(a).

Der Dämmstoff, aus dem die Gefälleplatten gebildet sind, ist günstigerweise ein Hartschaum, der bevorzugt ausgewählt ist aus Polyurethan, Polystyrol, insbesondere in Form von expandiertem Polystyrol (EPS) oder extrudiertem Polystyrol (XPS), oder einem Mineralfaserdämmstoff.

Die Kehl-Ausgleichsplatten und/oder die Grat-Ausgleichsplatten des erfindungsgemäßen Systems können ebenfalls aus einem Dämmstoff gebildet sein, insbesondere aus demselben Dämmstoff wie die Gefälleplatten, dies ist jedoch nicht zwingend notwendig. Da die Ausgleichsplatten immer nur oberhalb von Gefälleplatten angeordnet werden, müssen sie nicht unbedingt zur Dämmwirkung beitragen, und können daher z.B. auch aus einem ungeschäumten Kunststoffmaterial oder aus Holz hergestellt sein.

Vorteilhaft ist es, wenn die Gefälleplatten auf der Grundfläche und/oder auf der Deckfläche eine Kaschierung aufweisen, die bevorzugt ausgewählt ist aus einer Aluminiumfolie, einem mineralischen oder synthetischen Vlies oder Gewebe, einer Papierlage oder einer Verbundfolie aus Aluminium und Papier. Diese Kaschierung kann zur Verbesserung des Dämmwertes beitragen. Beidseitig kaschierte Gefälleplatten aus Polyurethan können als sogenannte Laminatorplatten in einem kontinuierlichen Verfahren hergestellt werden.

Das erfindungsgemäße System eignet sich, wie bereits oben erwähnt, in besonderer Weise für die Verwendung von derartigen Laminatorplatten als Gefälleplatten. Die Ausgleichsplatten weisen dabei in der Regel keine Kaschierung auf. Die Ausgleichsplatten können somit auf einfache Weise, z.B. durch Aussägen aus einem größeren Polyurethanblock, hergestellt werden.

Die Erfindung offenbart ferner eine Kehl-Ausgleichsplatte für ein System zur Herstellung einer Wärmedämmschicht auf einem Flachdach, wobei die Kehl-Ausgleichsplatte eine ebene Grundfläche und eine ebene Deckfläche in Form eines rechtwinkligen, gleichschenkligen Dreiecks aufweist, und wobei die Kehl-Ausgleichsplatte am Schnittpunkt der Katheten eine Höhe von ΔH aufweist und entlang der Hypotenuse eine geringere Höhe von 0 bis 2 cm.

Die Erfindung betrifft ferner einen Satz gemäß Anspruch 9 aus einer ersten Grat-Ausgleichsplatte und einer zweiten Grat-Ausgleichsplatte für ein System zur Herstellung einer Wärmedämmschicht auf einem Flachdach, wobei die Grat-Ausgleichsplatten jeweils eine ebene Grundfläche und eine ebene Deckfläche in Form eines rechtwinkligen, gleichschenkligen Dreiecks aufweisen, oder im Fall der zweiten Grat-Ausgleichsplatte optional in Form eines gleichschenkligen Trapezes, bei dem die rechtwinklige Spitze des Dreiecks abgeschnitten ist, wobei die erste Grat-Ausgleichsplatte eine konstante Höhe von ΔH aufweist, und wobei die zweite Grat-Ausgleichsplatte entlang der Hypotenuse eine Höhe von ΔH aufweist und am Schnittpunkt der Katheten bzw. gegenüber der Hypotenuse eine geringere Höhe von 0 bis zu 2 cm.

Die Vorteile und bevorzugten Ausführungsformen des erfindungsgemäßen Satzes aus einer ersten und einer zweiten Grat-Ausgleichsplatte wurden bereits im Zusammenhang mit dem erfindungsgemäßen System zur Herstellung einer Wärmedämmschicht auf einem Flachdach beschrieben.

Die nachfolgenden Ausführungsbeispiele dienen der näheren Erläuterung der Erfindung unter Bezugnahme auf die Figuren. Es zeigen im Einzelnen:
- Figur 1:: schematische Darstellung einer Gefälleplatte eines erfindungsgemäßen Systems;
- Figur 2:: schematische Darstellung einer Kehl-Ausgleichsplatte ;
- Figur 3:: schematische Darstellung einer erfindungsgemäßen ersten Grat-Ausgleichsplatte ;
- Figur 4:: schematische Darstellung einer erfindungsgemäßen zweiten Grat-Ausgleichsplatte;
- Figuren 5 und 6:: schematische Darstellung der Herstellung einer Wärmedämmschicht mit einer Kehle; und
- Figuren 7 bis 9:: schematische Darstellung der Herstellung einer Wärmedämmschicht mit einem Grat.

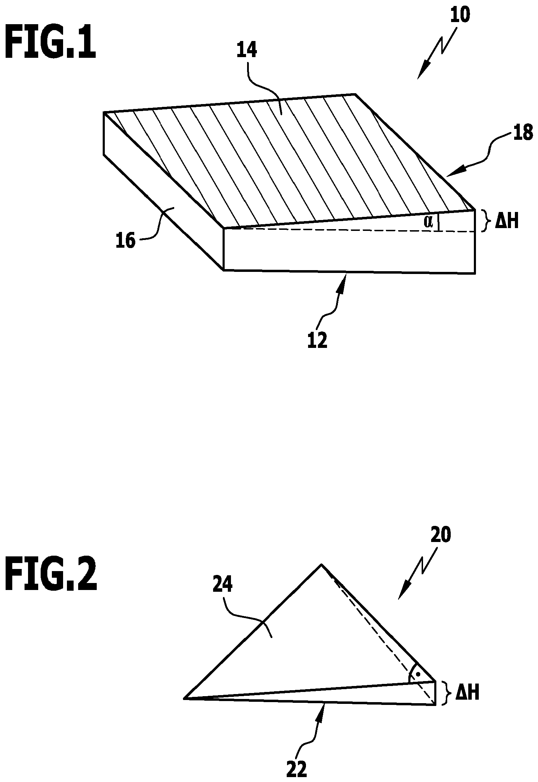

Die Figur 1 zeigt schematisch eine perspektivische Darstellung einer Gefälleplatte 10 eines erfindungsgemäßen Systems für die Herstellung einer Wärmedämmschicht auf einem Flachdach. Die Gefälleplatte 10 weist eine quadratische Grundfläche 12 und eine Deckfläche 14 auf, die zur Grundfläche 12 um einen Neigungswinkel α geneigt ist. Zwischen den Grund- und Deckflächen erstrecken sich vier zur Grundfläche 12 senkrechte Seitenflächen. Eine zur Gefällerichtung der Deckfläche 14 senkrechte Seitenfläche 16 weist eine Anfangshöhe auf und die parallele, gegenüber liegende Seitenfläche 18 weist eine Endhöhe auf, wobei die Seitenflächen 16 und 18 eine Höhendifferenz ΔH aufweisen.

Die Gefälleplatte 10 ist aus einem Dämmstoff gebildet, z.B. aus Polyurethan, und weist auf der Grundfläche 12 und der Deckfläche 14 eine Kaschierung auf, z.B. aus einer Aluminiumfolie. Die Gefälleplatte 10 kann insbesondere durch Aufschäumen von Polyurethan und gleichzeitiges Kaschieren der Grundfläche 12 und der Deckfläche 14 hergestellt sein.

Das erfindungsgemäße System umfasst eine Mehrzahl von identischen Gefälleplatten 10, die eine Serie bilden. Das System umfasst weitere Serien von Gefälleplatten, wobei die Gefälleplatten einer nachfolgenden Serie eine Seitenfläche mit einer Anfangshöhe aufweisen, die der Endhöhe der Seitenfläche 18 der Gefälleplatte 10 entspricht. Die Abmessungen der Grundfläche 12 und der Deckfläche 14, der Neigungswinkel α und die Höhendifferenz ΔH sind bei den Gefälleplatten aller Serien gleich.

Beispielhaft kann die Grundfläche 12 Abmessungen von 120 x 120 cm aufweisen und die Deckfläche 14 einen Neigungswinkel α von 1,5°. Daraus ergibt sich dann eine Höhendifferenz ΔH von etwa 3 cm.

Die Figur 2 zeigt schematisch eine perspektivische Darstellung einer Kehl-Ausgleichsplatte 20. Die Kehl-Ausgleichsplatte 20, die ebenfalls aus einem Dämmstoff bestehen kann, weist eine ebene Grundfläche 22 und eine ebene Deckfläche 24 in Form von gleichschenkligen Dreiecken auf, die im Wesentlichen der diagonal halbierten Grundfläche 12 der Gefälleplatte 10 entsprechen. Am Schnittpunkt der Katheten weist die Kehl-Ausgleichsplatte 20 eine Höhe von ΔH auf und entlang der Hypotenuse eine Höhe von theoretisch null (wie in der Figur dargestellt), in der Praxis z.B. von bis zu 1,5 cm (bei ΔH = 3 cm). Dementsprechend verkürzen sich die Katheten gegenüber den Seitenlängen der Gefälleplatte 10.

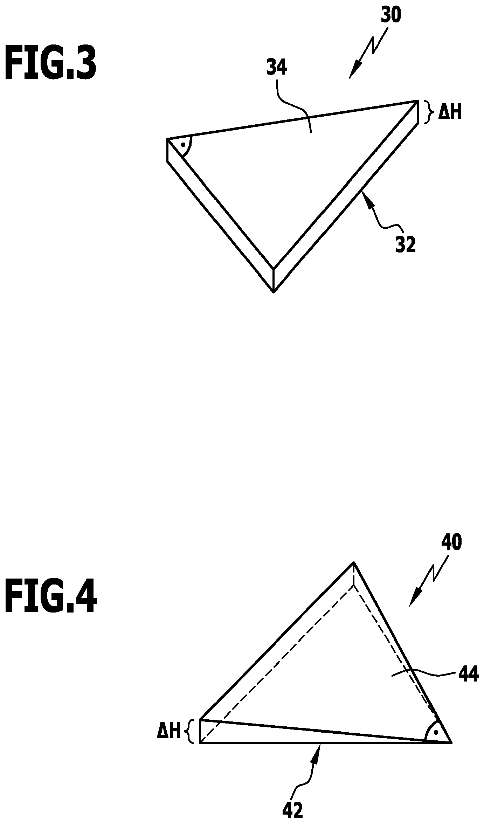

Die Figur 3 zeigt schematisch eine perspektivische Darstellung einer erfindungsgemäßen ersten Grat-Ausgleichsplatte 30. Die erste Grat-Ausgleichsplatte 30 weist eine ebene Grundfläche 32 und eine ebene Deckfläche 34 in Form von gleichschenkligen Dreiecken auf, die im Wesentlichen der diagonal halbierten Grundfläche 12 der Gefälleplatte 10 entsprechen. Die erste Grat-Ausgleichsplatte 30 weist eine konstante Höhe von ΔH auf.

Die Figur 4 zeigt schematisch eine perspektivische Darstellung einer erfindungsgemäßen zweiten Grat-Ausgleichsplatte 40. Die zweite Grat-Ausgleichsplatte 40 weist eine ebene Grundfläche 42 und eine ebene Deckfläche 44 in Form von gleichschenkligen Dreiecken auf, die im Wesentlichen der diagonal halbierten Grundfläche 12 der Gefälleplatte 10 entsprechen. Entlang der Hypotenuse weist die zweite Grat-Ausgleichsplatte 40 eine Höhe von ΔH auf und am Schnittpunkt der Katheten (bzw. gegenüber der Hypotenuse) eine Höhe von theoretisch null (wie in der Figur dargestellt), in der Praxis z.B. von bis zu 1,5 cm (bei ΔH = 3 cm). Dementsprechend verkürzen sich die Katheten gegenüber den Seitenlängen der Gefälleplatte 10, und die Grundfläche 42 und Deckfläche 44 haben in der Praxis die Form eines Trapezes, bei dem die rechtwinklige Spitze des Dreiecks abgeschnitten ist.

Die Kehl-Ausgleichsplatte 20 und die Grat-Ausgleichsplatten 30 und 40 weisen keine Kaschierung auf.

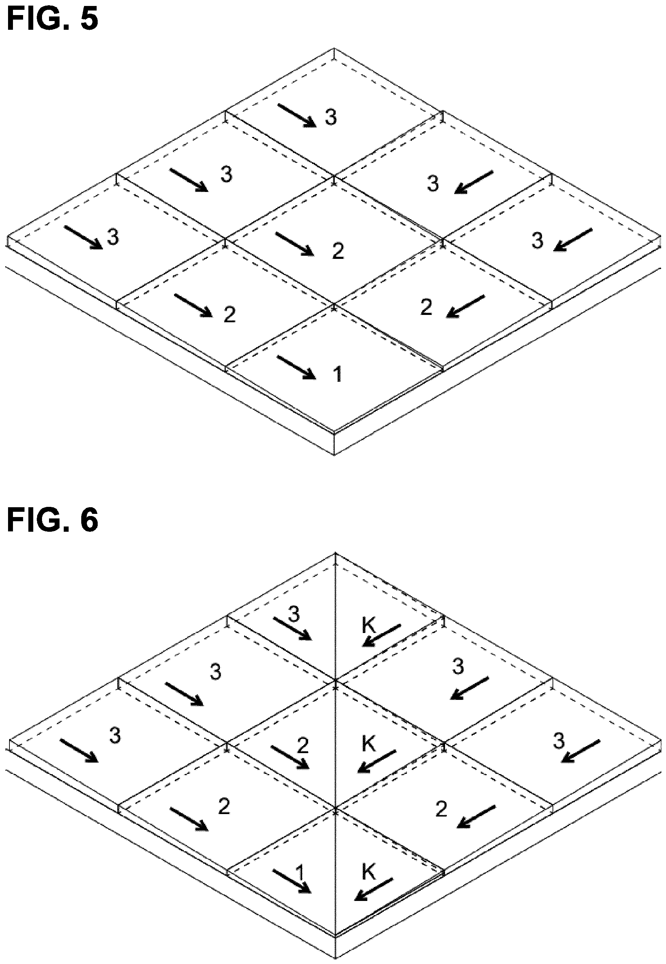

Die Figuren 5 und 6 zeigen schematisch die Herstellung einer Wärmedämmschicht auf einem Flachdach, wobei zwei Bereiche der Wärmedämmschicht entlang einer Kehle aneinander angrenzen, mit einem erfindungsgemäßen System. Dieses System umfasst mehrere Serien mit jeweils einer Mehrzahl von identischen Gefälleplatten aus einem Dämmstoff, entsprechend der in Figur 1 dargestellten Gefälleplatte 10. In den Figuren sind drei aufeinander folgende Serien dargestellt, deren Gefälleplatten mit 1, 2 bzw. 3 in aufsteigender Höhe bezeichnet sind. Das System umfasst ferner eine Mehrzahl von identischen Kehl-Ausgleichsplatten, die mit K bezeichnet sind, und die der in Figur 2 dargestellten Kehl-Ausgleichsplatte 20 entsprechen.

Zur Ausbildung der Kehle werden in einem ersten Schritt drei Gefälleplatten der Serien 1, 2 und 3 über Eck angeordnet, wobei die Gefällerichtungen der Deckflächen dieser Gefälleplatten (in den Figuren durch Pfeile dargestellt) dieselbe Orientierung aufweisen. Die Diagonalen dieser Gefälleplatten entsprechen der zu bildenden Kehle, die in den Figuren aufsteigend von der vorderen Ecke zur hinteren Ecke der dargestellten Wärmedämmschicht verläuft. Die Kehle teilt die Wärmedämmschicht in einen linken Bereich und einen rechten Bereich mit zueinander senkrecht orientierten Gefällerichtungen, wobei diese Bereiche durch weitere Gefälleplatten der jeweiligen Serie gebildet werden (siehe Figur 5).

In einem zweiten Schritt wird auf jeder Gefälleplatte im Bereich der Kehle eine Kehl-Ausgleichsplatte K angeordnet, wobei die Kehl-Ausgleichsplatten K jeweils deckungsgleich auf der rechten diagonalen Hälfte (über der Seitenfläche mit der Anfangshöhe) angeordnet werden. Dadurch ergibt sich in diesem Bereich die gewünschte Gefällerichtung.

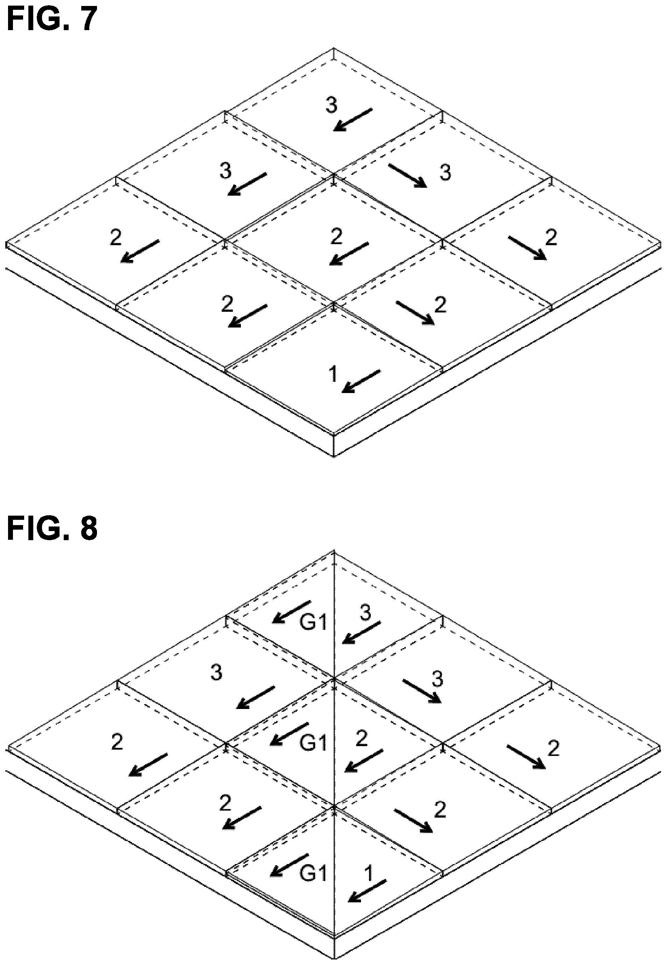

Die Figuren 7, 8 und 9 zeigen schematisch die Herstellung einer Wärmedämmschicht auf einem Flachdach, wobei die Wärmedämmschicht zwei Bereiche umfasst, die entlang eines Grates aneinander angrenzen, mit einem erfindungsgemäßen System. Dieses System umfasst mehrere Serien mit jeweils einer Mehrzahl von identischen Gefälleplatten aus einem Dämmstoff, entsprechend der in Figur 1 dargestellten Gefälleplatte 10. In den Figuren sind drei aufeinander folgende Serien dargestellt, deren Gefälleplatten mit 1, 2 bzw. 3 in aufsteigender Höhe bezeichnet sind. Das System umfasst ferner eine Mehrzahl von ersten, identischen Grat-Ausgleichsplatten und eine Mehrzahl von zweiten, identischen Grat-Ausgleichsplatten, die mit G1 bzw. G2 bezeichnet sind, und die den in Figur 3 und Figur 4 dargestellten Grat-Ausgleichsplatten 30 bzw. 40 entsprechen.

In einem ersten Schritt werden drei Gefälleplatten der Serien 1, 2 und 3 im Bereich des zu bildenden Grates über Eck angeordnet. Dieser Grat verläuft in den Figuren aufsteigend von der vorderen zur hinteren Ecke der dargestellten Wärmedämmschicht und teilt diese in einen linken und einen rechten Bereich mit zueinander senkrecht orientierten Gefällerichtungen. Diese Bereiche werden durch weitere Gefälleplatten der jeweils nachfolgenden Serie gebildet (siehe Figur 7).

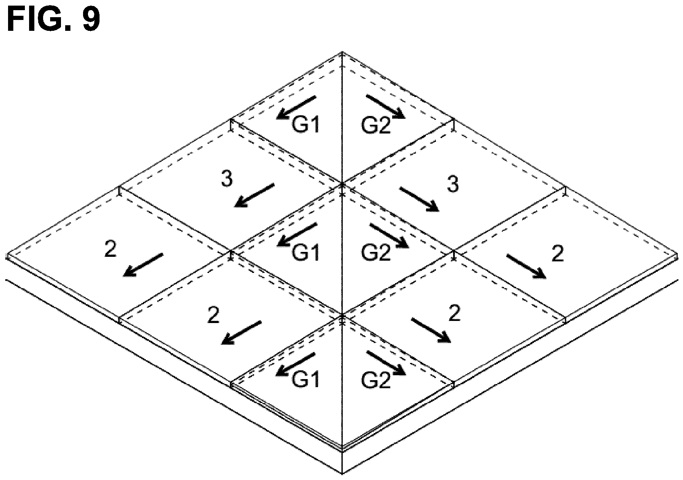

In einem zweiten Schritt wird auf jeder der Gefälleplatten entlang des Grates auf der linken diagonalen Hälfte (über der Seitenfläche mit der Anfangshöhe) eine erste Grat-Ausgleichsplatte G1 und auf der rechten diagonalen Hälfte (über der Seitenfläche mit der Endhöhe) eine zweite Grat-Ausgleichsplatte G2 jeweils deckungsgleich angeordnet (siehe Figur 8 und Figur 9). Dadurch wird im rechten Bereich die gewünschte Gefällerichtung erhalten und im linken Bereich erfolgt ein Höhenausgleich.

### Bezugszeichenliste

- 10: Gefälleplatte
- 12: Grundfläche
- 14: Deckfläche
- 16: Seitenfläche mit Anfangshöhe
- 18: Seitenfläche mit Endhöhe
- 20: Kehl-Ausgleichsplatte
- 22: Grundfläche
- 24: Deckfläche
- 30: Erste Grat-Ausgleichsplatte
- 32: Grundfläche
- 34: Deckfläche
- 40: Zweite Grat-Ausgleichsplatte
- 42: Grundfläche
- 44: Deckfläche

- 1: Gefälleplatten der ersten Serie
- 2: Gefälleplatten der zweiten Serie
- 3: Gefälleplatten der dritten Serie

- K: Kehl-Ausgleichsplatten
- G1: Erste Grat-Ausgleichsplatten
- G2: Zweite Grat-Ausgleichsplatten

## Patentansprüche

1. System für die Herstellung einer Wärmedämmschicht auf einem Flachdach, wobei die Wärmedämmschicht eine dem Flachdach zugewandte, ebene Grundfläche und eine dem Flachdach abgewandte, ebene Deckfläche aufweist, die zur Grundfläche um einen Neigungswinkel α geneigt ist, wobei die Wärmedämmschicht mindestens zwei Bereiche umfasst, die jeweils entlang eines Grates oder einer Kehle aneinander angrenzen, und wobei die Gefällerichtungen der Deckflächen angrenzender Bereiche senkrecht zueinander orientiert sind, umfassend
- mehrere Serien (1, 2, 3) mit jeweils einer Mehrzahl von identischen Gefälleplatten (10) aus einem Dämmstoff, wobei die Gefälleplatten (10) ebene, quadratische Grundflächen (12) und Deckflächen (14) sowie zur Grundfläche (12) senkrechte Seitenflächen (16, 18) aufweisen, wobei die Deckfläche (14) zur Grundfläche (12) um den Neigungswinkel α geneigt ist, wobei zwei parallele, zur Gefällerichtung senkrechte Seitenflächen (16, 18) eine Anfangshöhe bzw. eine Endhöhe aufweisen, deren Höhendifferenz ΔH ist, und wobei die Gefälleplatten (10) aller Serien (1, 2, 3) dieselben Abmessungen der Grund- und Deckflächen (12, 14) aufweisen, während sich die Höhen der verschiedenen Serien (1, 2, 3) derart unterscheiden, dass die Endhöhe einer vorangehenden Serie (1, 2) von Gefälleplatten (10) der Anfangshöhe einer nachfolgenden Serie (2, 3) von Gefälleplatten (10) entspricht, aber die Höhendifferenz ΔH bei den Gefälleplatten (10) aller Serien (1, 2, 3) gleich ist,
**dadurch gekennzeichnet, dass** das System ferner umfasst:
- eine Mehrzahl von identischen Kehl-Ausgleichsplatten (20, K), wobei die Kehl-Ausgleichsplatten (20, K) ebene Grundflächen (22) und Deckflächen (24) in Form eines rechtwinkligen, gleichschenkligen Dreiecks aufweisen, wobei die Länge der Katheten des Dreiecks im Wesentlichen der Seitenlänge der Grundflächen (12) der Gefälleplatten (10) entspricht, und wobei die Kehl-Ausgleichsplatten (20, K) am Schnittpunkt der Katheten eine Höhe von ΔH aufweisen und entlang der Hypotenuse eine geringere Höhe von 0 bis 2 cm; und
- eine Mehrzahl von ersten, identischen Grat-Ausgleichsplatten (30, G1) und eine Mehrzahl von zweiten, identischen Grat-Ausgleichsplatten (40, G2), wobei alle Grat-Ausgleichsplatten (30, G1; 40, G2) ebene Grundflächen (32; 42) und Deckflächen (34; 44) in Form eines rechtwinkligen, gleichschenkligen Dreiecks aufweisen, oder im Fall der zweiten Grat-Ausgleichsplatten (40, G2) optional eines gleichschenkligen Trapezes, bei dem die rechtwinklige Spitze des Dreiecks abgeschnitten ist, wobei die Länge der Katheten des Dreiecks im Wesentlichen der Seitenlänge der Grundflächen (12) der Gefälleplatten (10) entspricht, wobei die ersten Grat-Ausgleichsplatten (30, G1) eine konstante Höhe von ΔH aufweisen, und wobei die zweiten Grat-Ausgleichsplatten (40, G2) entlang der Hypotenuse eine Höhe von ΔH aufweisen und am Schnittpunkt der Katheten bzw. gegenüber der Hypotenuse eine geringere Höhe von 0 bis 2 cm.

2. System nach Anspruch 1, wobei die Seitenlänge der Grundflächen (12) der Gefälleplatten (10) im Bereich von 80 bis 150 cm liegt, bevorzugt im Bereich von 100 bis 120 cm.

3. System nach Anspruch 1 oder 2, wobei die Gefälleplatten (10) in Form von jeweils zwei rechteckigen Teilplatten vorliegen.

4. System nach einem der vorhergehenden Ansprüche, wobei der Neigungswinkel α im Bereich von 0,5° bis 3° liegt, bevorzugt im Bereich von 0,8° bis 2°.

5. System nach einem der vorhergehenden Ansprüche, wobei der Dämmstoff ein Hartschaum ist, der bevorzugt ausgewählt ist aus Polyurethan, Polystyrol, insbesondere in Form von expandiertem Polystyrol (EPS) oder extrudiertem Polystyrol (XPS), oder einem Mineralfaserdämmstoff.

6. System nach einem der vorhergehenden Ansprüche, wobei die Kehl-Ausgleichsplatten (20, K) und/oder die Grat-Ausgleichsplatten (30, G1; 40, G2) aus einem Dämmstoff gebildet sind, insbesondere aus demselben Dämmstoff wie die Gefälleplatten (10).

7. System nach einem der Ansprüche 1 bis 5, wobei die Kehl-Ausgleichsplatten (20, K) und/oder die Grat-Ausgleichsplatten (30, G1; 40, G2) aus einem ungeschäumten Kunststoffmaterial oder aus Holz hergestellt sind.

8. System nach einem der vorhergehenden Ansprüche, wobei die Gefälleplatten (10) auf der Grundfläche (12) und/oder auf der Deckfläche (14), bevorzugt auf der Grundfläche (12) und auf der Deckfläche (14), eine Kaschierung aufweisen, die bevorzugt ausgewählt ist aus einer Aluminiumfolie, einem mineralischen oder synthetischen Vlies oder Gewebe, einer Papierlage oder einer Verbundfolie aus Aluminium und Papier.

9. Satz aus einer ersten Grat-Ausgleichsplatte (30, G1) und einer zweiten Grat-Ausgleichsplatte (40, G2) für ein System zur Herstellung einer Wärmedämmschicht auf einem Flachdach, wobei die Grat-Ausgleichsplatten (30, G1; 40, G2) jeweils eine ebene Grundfläche (32; 42) und eine ebene Deckfläche (42; 44) in Form eines rechtwinkligen, gleichschenkligen Dreiecks aufweisen, oder im Fall der zweiten Grat-Ausgleichsplatte (40, G2) optional eines gleichschenkligen Trapezes, bei dem die rechtwinklige Spitze des Dreiecks abgeschnitten ist, wobei die erste Grat-Ausgleichsplatte (30, G1) eine konstante Höhe von ΔH aufweist, und wobei die zweite Grat-Ausgleichsplatte (40, G2) entlang der Hypotenuse eine Höhe von ΔH aufweist und am Schnittpunkt der Katheten bzw. gegenüber der Hypotenuse eine geringere Höhe von 0 bis 2 cm.

## Claims

1. System for producing a heat insulating layer on a flat roof, wherein the heat insulating layer has a planar base surface facing the flat roof and a planar cover surface remote from the flat roof, said cover surface being inclined in relation to the base surface by an angle of inclination α, wherein the heat insulating layer comprises at least two regions, which each adjoin one another along a hip or a valley, and wherein the slope directions of the cover surfaces of adjoining regions are oriented perpendicularly to one another, comprising
- a plurality of series (1, 2, 3), each with a plurality of identical sloped plates (10) made of an insulating material, wherein the sloped plates (10) have planar, square base surfaces (12) and cover surfaces (14) as well as side surfaces (16, 18) perpendicular to the base surface (12), wherein the cover surface (14) is inclined in relation to the base surface (12) by the angle of inclination α, wherein two parallel side surfaces (16, 18) perpendicular to the slope direction have a starting height and an ending height, respectively, the height difference of which is ΔH, and wherein the sloped plates (10) of all series (1, 2, 3) have the same dimensions of the base and cover surfaces (12, 14), while the heights of the different series (1, 2, 3) differ in such a way that the end height of a preceding series (1, 2) of sloped plates (10) corresponds to the starting height of a subsequent series (2, 3) of sloped plates (10), but the height difference ΔH in the sloped plates (10) of all series (1, 2, 3) is the same,
**characterized in that** the system further comprises:
- a plurality of identical valley compensation plates (20, K), wherein the valley compensation plates (20, K) have planar base surfaces (22) and cover surfaces (24) in the form of a right isosceles triangle, wherein the length of the legs of the triangle correspond substantially to the side length of the base surfaces (12) of the sloped plates (10), and wherein the valley compensation plates (20, K) have a height of ΔH at the intersection of the legs and has a smaller height of 0 to 2 cm along the hypotenuse; and
- a plurality of first identical hip compensation plates (30, G1) and a plurality of second identical hip compensation plates (40, G2), wherein all hip compensation plates (30, G1; 40, G2) have planar base surfaces (32; 42) and cover surfaces (34; 44) in the form of a right isosceles triangle, or, in the case of the second hip compensation plates (40, G2), optionally of an isosceles trapezoid, in which the right-angled tip of the triangle is cut off, wherein the length of the legs of the triangle corresponds substantially to the side length of the base surfaces (12) of the sloped plates (10), wherein the first hip compensation plates (30, G1) have a constant height of ΔH, and wherein the second hip compensation plates (40, G2) have a height of ΔH along the hypotenuse and a smaller height of 0 to 2 cm at the intersection of the legs or opposite the hypotenuse.

2. System in accordance with Claim 1, wherein the side length of the base surfaces (12) of the sloped plates (10) is in the range of 80 to 150 cm, preferably in the range of 100 to 120 cm.

3. System in accordance with Claim 1 or 2, wherein the sloped plates (10) are present in the form of in each case two rectangular partial plates.

4. System in accordance with any one of the preceding Claims, wherein the angle of inclination α is in the range of 0.5° to 3°, preferably in the range of 0.8° to 2°.

5. System in accordance with any one of the preceding Claims, wherein the insulating material is a hard foam, which is preferably selected from polyurethane, polystyrene, in particular in the form of expanded polystyrene (EPS) or extruded polystyrene (XPS), or a mineral fiber insulating material.

6. System in accordance with any one of the preceding Claims, wherein the valley compensation plates (20, K) and/or the hip compensation plates (30, G1; 40, G2) are made of an insulating material, in particular of the same insulating material as the sloped plates (10).

7. System in accordance with any one of Claims 1 to 5, wherein the valley compensation plates (20, K) and/or the hip compensation plates (30, G1; 40, G2) are produced from an unfoamed plastics material or from wood.

8. System in accordance with any one of the preceding Claims, wherein the sloped plates (10) have a lamination on the base surface (12) and/or on the cover surface (14), preferably on the base surface (12) and on the cover surface (14), said lamination preferably being selected from an aluminum film, a mineral or synthetic nonwoven fabric or woven fabric, a paper layer or a composite film of aluminum and paper.

9. Set of a first hip compensation plate (30, G1) and a second hip compensation plate (40, G2) for a system for producing a heat insulating layer on a flat roof, wherein the hip insulating plates (30, G1; 40, G2) each have a planar base surface (32; 42) and a planar cover surface (42; 44) in the form of a right isosceles triangle or, in the case of the second hip compensation plate (40, G2), optionally of an isosceles trapezoid, in which the right-angled tip of the triangle is cut off, wherein the first hip compensation plate (30, G1) has a constant height of ΔH, and wherein the second hip compensation plate (40, G2) has a height of ΔH along the hypotenuse and a smaller height of 0 to 2 cm at the intersection of the legs or opposite the hypotenuse.

## Revendications

1. Système de fabrication d'une couche d'isolation thermique sur un toit plat, dans lequel la couche d'isolation thermique présente une surface de base plane tournée vers le toit plat, et une surface de recouvrement plane opposée au toit plat, qui est inclinée par rapport à la surface de base selon un angle d'inclinaison α, dans lequel la couche d'isolation thermique comprend au moins deux zones, qui se jouxtent l'une l'autre respectivement le long d'une arête ou d'une gorge, et dans lequel les sens de pente des surfaces de recouvrement de zones se jouxtant sont orientés de manière perpendiculaire les uns par rapport aux autres, comprenant
- plusieurs séries (1, 2, 3) avec respectivement une multitude de plaques de pente (10) identiques composées d'un matériau isolant, dans lequel les plaques de pente (10) présentent des surfaces de base (12) planes, carrées et des surfaces de recouvrement (14) ainsi que des faces latérales (16, 18) perpendiculaires à la surface de base (12), dans lequel la surface de recouvrement (14) est inclinée selon l'angle d'inclinaison α par rapport à la surface de base (12), dans lequel deux surfaces latérales (16, 18) parallèles, perpendiculaires au sens de pente présentent une hauteur de départ ou une hauteur de fin, dont la différence de hauteur est ΔH, et dans lequel les plaques de pente (10) de toutes les séries (1, 2, 3) présentent les mêmes dimensions des surfaces de base et de recouvrement (12, 14) tandis que les hauteurs des différentes séries (1, 2, 3) sont différentes de telle manière que la hauteur de fin d'une série (1, 2) qui précède des plaques de pente (10) correspond à la hauteur de départ d'une série (2, 3) qui suit des plaques de pente (10), toutefois la différence de hauteur ΔH pour les plaques de pente (10) de toutes les séries (1, 2, 3) est égale,
**caractérisé en ce que** le système comprend en outre :
- une multitude de plaques de compensation de gorge (20, K) identiques, dans lequel les plaques de compensation de gorge (20, K) présentent des surfaces de base (22) et des surfaces de recouvrement (24) planes sous la forme d'un triangle rectangle, isocèle, dans lequel la longueur des côtés du triangle correspond sensiblement à la longueur des côtés des surfaces de base (12) des plaques de pente (10), et dans lequel les plaques de compensation de gorge (20, K) présentent au niveau du point d'intersection des côtés une hauteur de ΔH et le long de l'hypoténuse une hauteur inférieure de 0 à 2 cm ; et
- une multitude de premières plaques de compensation d'arête (30, G1) identiques et une multitude de deuxièmes plaques de compensation d'arête (40, G2) identiques, dans lequel toutes les plaques de compensation d'arête (30, G1 ; 40, G2) présentent des surfaces de base (32 ; 42) et des surfaces de recouvrement (34 ; 44) planes sous la forme d'un triangle rectangle, isocèle, ou dans le cas des deuxièmes plaques de compensation d'arête (40, G2), en option d'un trapèze isocèle, où la pointe d'angle droit du triangle est tronquée, dans lequel la longueur des côtés du triangle correspond sensiblement à la longueur des côtés des surfaces de base (12) des plaques de pente (10), dans lequel les premières plaques de compensation d'arête (30, G1) présentent une hauteur constante de ΔH, et dans lequel les deuxièmes plaques de compensation d'arête (40, G2) présentent le long de l'hypoténuse une hauteur de ΔH et, au niveau du point d'intersection des côtés ou par rapport à l'hypoténuse, une hauteur inférieure de 0 à 2 cm.

2. Système selon la revendication 1, dans lequel la longueur des côtés des surfaces de base (12) des plaques de pente (10) se situe dans la plage de 80 à 150 cm, de manière préférée dans la plage de 100 à 120 cm.

3. Système selon la revendication 1 ou 2, dans lequel les plaques de pente (10) se présentent sous la forme de respectivement deux plaques partielles rectangulaires.

4. Système selon l'une quelconque des revendications précédentes, dans lequel l'angle d'inclinaison α se situe dans la plage de 0,5° à 3°, de manière préférée dans la plage de 0,8° à 2°.

5. Système selon l'une quelconque des revendications précédentes, dans lequel le matériau isolant est une mousse dure, qui est choisie de manière préférée parmi le polyuréthane, le polystyrène, en particulier sous la forme de polystyrène expansé (EPS) ou de polystyrène extrudé (XPS), ou un matériau isolant à base de fibres minérales.

6. Système selon l'une quelconque des revendications précédentes, dans lequel les plaques de compensation de gorge (20, K) et/ou les plaques de compensation d'arête (30, G1 ; 40, G2) sont formées à partir d'un matériau isolant, en particulier à partir du même matériau isolant que les plaques de pente (10).

7. Système selon l'une quelconque des revendications 1 à 5, dans lequel les plaques de compensation de gorge (20, K) et/ou les plaques de compensation d'arête (30, G1 ; 40, G2) sont fabriquées à partir d'un matériau synthétique non moussé ou à partir de bois.

8. Système selon l'une quelconque des revendications précédentes, dans lequel les plaques de pente (10) présentent sur la surface de base (12) et/ou sur la surface de recouvrement (14), de manière préférée sur la surface de base (12) et sur la surface de recouvrement (14), un placage, qui est choisi de manière préférée parmi un film en aluminium, un non-tissé ou un tissu minéral ou synthétique, une couche de papier ou un film composite en aluminium et en papier.

9. Ensemble composé d'une première plaque de compensation d'arête (30, G1) et d'une deuxième plaque de compensation d'arête (40, G2) pour un système de fabrication d'une couche d'isolation thermique sur un toit plat, dans lequel les plaques de compensation d'arête (30, G1 ; 40, G2) présentent respectivement une surface de base (32 ; 42) plane et une surface de recouvrement (42 ; 44) plane sous la forme d'un triangle rectangle, isocèle, ou dans le cas de la deuxième plaque de compensation d'arête (40, G2), en option d'un trapèze isocèle, où la pointe d'angle droit du triangle est tronquée, dans lequel la première plaque de compensation d'arête (30, G1) présente une hauteur constante de ΔH, et dans lequel la deuxième plaque de compensation d'arête (40, G2) présente le long de l'hypoténuse une hauteur de ΔH et, au niveau du point d'intersection des côtés ou par rapport à l'hypoténuse, une hauteur inférieure de 0 à 2 cm.
